# EUROPEAN PATENT APPLICATION

(11) **EP 4 622 258 A1**
(43) Date of publication of application: **24.09.2025**
(21) Application number: 25160915.2
(22) Date of filing: 28.02.2025
(51) Int. Cl.: H04N 19/167, H04N 19/117, G02B 27/01, H04N 13/344, H04N 19/132, H04N 19/17, H04N 19/59, G06F 3/01

(54) **IMAGE COMPRESSION**

(30) Priority: 22.03.2024 US 202418614619
(71) Applicant: Microsoft Technology Licensing, LLC, Redmond, WA 98052 (US)
(72) Inventor: VOSS-WOLFF, CHRISTIAN, Redmond, 98052 (US); SCHIRSKI, MARC, Redmond, 98052 (US); REEH, MATTHIAS FELIX, Redmond, 98052 (US)
(74) Representative: CMS Cameron McKenna Nabarro Olswang LLP

(57) **Abstract**

Provided are an apparatus and a method for compressing a source image, the method comprising receiving the source image, the source image having a source resolution; and mapping a source pixel of the source image to a target pixel of a target image using a distortion function, the target image having a lower resolution than the source resolution, wherein the distortion function defines a mapping, the mapping comprising a one-to-one source-to-target pixel mapping within a foveal region, and the mapping comprising a more-than-one-to-one source-to-target pixel mapping outside of the foveal region, and wherein the foveal region is a defined area of pixels.

## Description

### BACKGROUND

Images are used in a wide variety of situations. Often, images are generated by a different device than a device which displays the images, therefore images are sent between devices, often via a network. Sending images requires significant communications network bandwidth especially for high resolution images and where images are sent at a high rate as part of a video stream.

An encoder/decoder system is typically used to enable the size of images to be reduced such that sending/receiving images requires a bandwidth that is supported by the network. The encoder/decoder system in various examples comprises hardware encoding/decoding units. However, it is often desirable that images have a higher resolution and/or be displayed more frequently than supported by the processing rate of the encoding/decoding units.

In mixed reality systems where a head-mounted device with lower computational power receives images for display from a remote image rendering device with higher computational power, it is often desirable that a resolution of images for display on a display of the head-mounted device at a desirable rate exceeds the capabilities of the encoding/decoding units used by each device.

The embodiments described below are not limited to implementations which solve any or all of the disadvantages of known encoding and/or decoding technologies.

### SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

A method for compressing a source image comprises receiving the source image, the source image having a source resolution. The method further comprises mapping a source pixel of the source image to a target pixel of a target image using a distortion function, the target image having a lower resolution than the source resolution, wherein the distortion function defines a mapping, the mapping comprising a one-to-one source-to-target pixel mapping within a foveal region, and the mapping comprising a more-than-one-to-one source-to-target pixel mapping outside of a foveal region. The foveal region is a defined area of pixels.

In this way, a high resolution source image can be compressed to a lower resolution target image in a way that retains quality within a foveal region at the expense of quality outside of the foveal region. This thereby enables transmission of a high-resolution image within the abilities of encoding/decoding units in a way that maintains perceived quality by a user.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of a remote computer comprising a compressor in communication with a local computer comprising a decompressor via a network;
FIG. 2 is a flow chart of a method of compressing a source image;
FIG. 3 is a flow chart of a method of decompressing a compressed image;
FIG. 4 shows an exemplary image before and after a compression method;
FIG. 5 shows an exemplary image before and after a decompression method;
FIG. 6 shows exemplary distortion functions used for compression and/or decompression;
FIG. 7 illustrates an exemplary computing-based device in which embodiments of a compressor and/or decompressor are implemented.
Like reference numerals are used to designate like parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

As mentioned above, the inventors have noted a way to compress a source image into a target image with a lower resolution in a way that enables encoding/decoding for transmission within the abilities of encoding/decoding units whilst maintaining quality in areas of the image that are particularly perceived by a user viewing the image once decompressed.

Namely, a method of compression comprises receiving the source image, the source image having a source resolution; mapping a source pixel of the source image to a target pixel of a target image using a distortion function, the target image having a lower resolution than the source resolution, wherein the distortion function defines a mapping, the mapping comprising a one-to-one source-to-target pixel mapping within a foveal region, and the mapping comprising a more-than-one-to-one source-to-target pixel mapping outside of a foveal region, and wherein the foveal region is a defined area of pixels.

In this way, pixels of the source image that are within the foveal region are mapped to target pixels in a way that preserves them, therefore maintaining the quality of the source image when mapping. Pixels of the source image outside of the foveal region are mapped in a many-to-one way, therefore being combined in the target image. In this way, the mapping enables a reduction in resolution of the source image whilst maintaining quality in an area of the source image. In turn, this enables the quality of areas of the source image perceived by a viewer to a higher degree than other areas of the source image to be preserved.

The unconventional mapping of source pixels to target pixels, incorporating a foveal region, therefore makes the method operate in an unconventional manner to enable compression of an image for encoding and transmission whilst maintaining quality in a perceived area of the image.

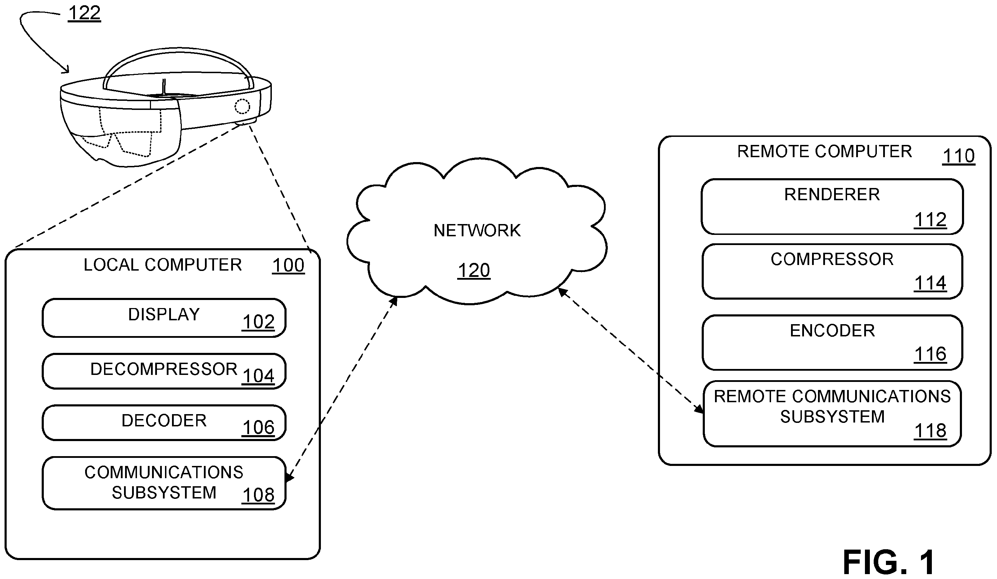

FIG. 1 is a schematic diagram of a remote computer comprising a compressor in communication with a local computer comprising a decompressor via a network. It shows an exemplary environment in which the disclosed technology may be implemented. In various examples, functionality implementing the disclosed technology is located in and/or performed by local computer 100 and/or remote computer 110. Local computer 100is optionally comprised in and/or associated with a head-mounted device 122.

Local computer 100 optionally comprises a display 102, decompressor 104, decoder 106 and communications subsystem 108, or any combination including a decompressor 104 thereof. Communications subsystem 108, in some cases, communicates via a network 120 (such as a wireless communications network or the internet or any other communications network), and receives a compressed image, in an example an encoded compressed image. A decoder 106, in various examples, decodes the encoded compressed image to produce a compressed image. Decompressor 104 decompresses the compressed image in accordance with the disclosed technology.

Local computer 100 optionally comprises a display 102, which displays in some cases decompressed images produced by the decompressor 104.

In an example, decoder 106 is implemented as a hardware decoder on the local computer 100. In another example, decoder 106 is implemented in software or firmware.

Remote computer 110 optionally comprises a renderer 112, compressor 114, encoder 116, and remote communications subsystem 118, or any combination including compressor 114 thereof.

In various examples, renderer 112 is used to render an image for displaying at least a portion of the rendered image on the display 102 of a local computer 100. Rendering refers to the generation of an image, for example a color and/or depth image. It should be appreciated that different rendering methods are used in different cases by the renderer 112, and that rendering in some cases is based on a variety of input data, for example movement data generated by a camera and/or tracking subsystem on a local computer 100, and/or data from a game application executing on the remote computer 110.

In various examples, remote computer 110 has more computational power than local computer 100, enabling remote computer 110 to render images more quickly and/or with higher resolution than local computer 100.

Compressor 114 receives at least one rendered image by the renderer 112, and compresses the image in accordance with the disclosed technology, to produce a compressed image.

Encoder 116 receives an image output by the compressor 114 and encodes the received image. Encoding, in various examples, comprises compressing the received image such that less data is required to represent the image. In one case, the compression is lossless or lossy.

In various examples, compressor 114 and encoder 116 perform their respective operations together, compressor 114 and encoder 116 being a same entity. In one example, encoder 116 performs the activities of the compressor 114 prior to encoding an image.

In a similar way, in one example, decoder 106 and decompressor 104 perform their respective operations together, decoder 106 and decompressor 104 being a same entity. In an example, decoder 106 performs the activities of the decompressor 104 after decoding a received image.

Remote communications subsystem 118 facilitates communication with a network 120. In various examples, an encoded image from the encoder 116 is sent via network 120, using the remote communications subsystem 118, to local computer 100, where in one case communications subsystem 108 receives the encoded image. In some cases, a compressed image by the compressor 114 is sent via network 120, using the remote communications subsystem 118, to local computer 100, where in one case communications subsystem 108 receives the compressed image.

It should be appreciated that any number of images are in various examples generated, received and/or sent by the mentioned entities. The images may be part of a stream of images being rendered at the remote computer and transmitted to the local computer in order to be displayed at the local computer at a video frame rate such as 30 frames per second or more.

In various examples, renderer 112 generates at least one image for display on display 102, in an example a display of a head-mounted device 122. Compressor 114 compresses at least one image of the at least one generated image, in accordance with the disclosed technology, to produce a compressed image.

In an example, the compressed image is sent via the network 120, using the remote communications subsystem 118, to the local computer 100. In some examples, the compressed image is encoded by the encoder 116 before being sent via the network 120, using the remote communications subsystem 118, to the local computer 100.

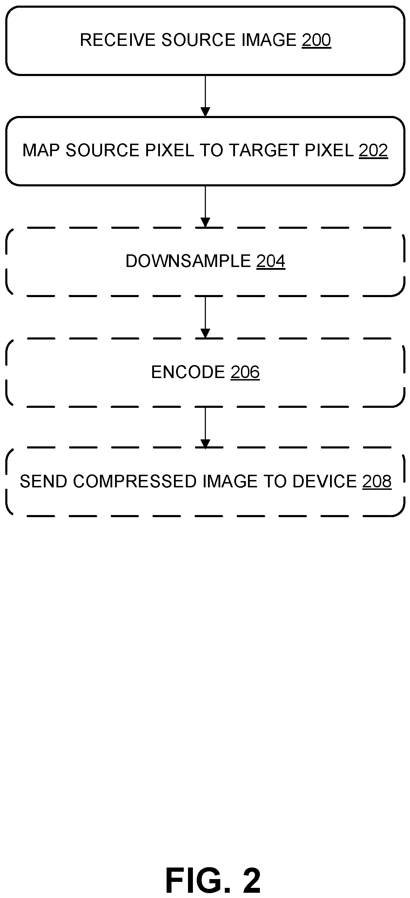

FIG. 2 is a flow chart of a method of compressing a source image, according to the disclosed technology. Such a method is in various examples performed by a compressor such as compressor 114 of FIG. 1, in one example a compressor of a remote computer 110 which renders images.

The method of FIG. 2 first comprises receiving a source image 200 (such as from memory or from a renderer), before mapping a source pixel of the source image to a target pixel 202 of a target image, the target image having a lower resolution than a source resolution of the source image.

The mapping is performed using a distortion function, as will be elaborate upon below, the distortion function defining a mapping comprising a one-to-one source-to-target pixel mapping within a foveal region, and the mapping comprising a more-than-one-to-one source-to-target pixel mapping outside of a foveal region. In various examples, the more-than-one-to-one source-to-target pixel mapping indicates that at least two pixels of the source image are mapped to a same pixel of the target image, in some cases meaning that at least one pixel value associated with each source pixel of the at least two pixels of the source image are mapped to a pixel value associated with the same pixel of the target image.

The foveal region is a defined area of pixels, for example a region, in some cases a contiguous region, of pixels. In some cases, the foveal region is a defined area of pixels of the source image. In some cases, the mapping means that the foveal region implicitly is a defined area of pixels of the target image, and in various examples vice versa. In an example, the foveal region is indicated by a binary image, the binary image having pixels with associated values, each being a first value or second value different to the first, the first value indicating a pixel within a foveal region and the second value indicating a pixel outside of the foveal region. In an example, the foveal region comprises at least one of: at least two pixels adjacent to each other, at least two pixels separated from each other by a pixel that is outside of the foveal region.

In one example, the foveal region is defined using at least one characteristic, for example at least one hardware characteristic, of a device by which the target image is to be decompressed and displayed, such as the local computer 100 of FIG. 1. In an example, the at least one hardware characteristic comprises at least one of: a position of a display associated with a device by which the target image is to be decompressed and displayed, and a lens type of at least one lens associated with a device by which the target image is to be decompressed and displayed. In various examples, the device by which the target image is to be decompressed and displayed is a head-mounted device.

In one example, the foveal region is defined, in addition to or alternatively to the definition of the foveal region mentioned above, using at least one of: a gaze direction of a user of a device by which the target image is to be decompressed and displayed, at least one characteristic of a network via which the target image is to be transmitted, an attention of a user of a device by which the target image is to be decompressed and displayed, a defined importance factor of an element of the source image. In one case, the characteristic of the network is a latency of the network.

In some cases, the attention of the user of the device by which the target image is to be decompressed and displayed is determined using a currently active menu in an interactive user interface displayed by the device, and/or a position of a cursor on a display of the device, the cursor for example controller by the user using a keyboard, mouse, handheld controller, and/or hand tracking. In various examples, an area of higher attention (determined as mentioned above) relative to another area is included in the foveal region.

In various examples, the defined importance factor of an element of the source image is predefined and/or generated by a remote computer, such as remote computer 110 of FIG. 1. In some cases, text to be displayed by the device by which the target image is to be decompressed and displayed is predefined to have an importance factor that indicates that it should be included within the foveal region. It should be appreciated that any entity, which for example is a non-text element to be displayed by the device by which the target image is to be decompressed and displayed, in various examples has an associated importance factor. In some cases, a threshold importance factor is required to be included in a foveal region. In one case, the threshold importance factor is determined based on the importance factors associated with elements, in some cases all elements, depicted in the source image.

In various examples, the foveal region is increased in size for a high latency of the network via which the target image is to be transmitted, relative to a size of the foveal region for a low latency of the network. In some examples, a position of the foveal region is defined such that a center of the foveal region is located towards an area of the target image that would substantially coincide with a user's gaze direction when the target image is decompressed and displayed on a display which is looked at by the user.

In one case, the foveal region is defined by being determined by looking up at least one property of the foveal region using a factor that influences the definition of the foveal region as described herein. In some cases, the foveal region is defined by being determined on-the-fly.

It should be appreciated that any method of defining the foveal region is possible. The inventors have noted that defining the foveal region as a higher priority region for the user than pixels outside of the foveal region when the user views a decompressed and displayed target image is particularly advantageous in various examples. The foveal region additionally may be defined according to characteristics of human perception and the human eye.

In some examples, the foveal region is predefined, and in one example is static, referring to the foveal region being unchanged after being defined. In various examples, an indicator of the foveal region is received by the method of FIG. 2 alongside the receiving of the source image 200. In one case, the indicator indicates the pixels of the source and/or target image comprising the foveal region, the size of the foveal region, and/or the location of the foveal region.

In various examples, the foveal region is defined dynamically, and as such in some cases changes based at least one factor influencing the definition of the foveal region. In one example, a changing gaze direction of a user, changing latency, and/or changing hardware characteristics of a device by which the target image is to be decompressed and displayed results in the foveal region being defined differently, in one case in terms of size, orientation, and/or location.

In various examples, in response to an increase in latency of the network via which the target image is to be transmitted, a size of the foveal region is increased in order to account for a maximum distance that an eye can move between subsequent target images that are decompressed and displayed on a display of a head-mounted device. In some examples, in response to a reduction in latency of the network via which the target image is to be transmitted, a size of the foveal region is decreased in order to account for a maximum distance that an eye can move between subsequent target images that are decompressed and displayed on a display of a head-mounted device, whilst balancing a quality loss from compression across the target image.

In various examples, the method of FIG. 2 defines the foveal region. In some cases, a definition of the foveal region is received or accessed by the method of FIG. 2.

In one example, should a determination of gaze direction be impossible, the foveal region is defined using static characteristics, for example at least one hardware characteristic of a device by which the target image is to be decompressed and displayed.

Mapping 202, in one case, comprises downsampling pixels of the source image to pixels of the target image. In one example, downsampling pixels of the source image to pixels of the target image is performed separately 204 to the mapping 202.

In various examples, in response to the target pixel as mapped 202 from a source pixel being within the foveal region, an associated pixel value of the target pixel is defined to be equivalent to an associated pixel value of the source pixel. In this way, pixels of the target image within the foveal region match corresponding pixels of the source image.

An image as described herein comprises at least one pixel, each pixel with at least one associated pixel value, in one case used to indicate a color and/or depth of the pixel in the image.

In various examples, in response to the target pixel as mapped 202 from a source pixel being outside of the foveal region, an associated pixel value of the target pixel is defined using a downsampling 204 technique. Downsampling refers to a method of condensing data associated with multiple pixels into data associated with fewer pixels. Here, because the mapping of source-to-target pixels outside the foveal region is many-to-one, multiple pixels of the source image are mapped to a same pixel of the target image. The associated pixel value of the same pixel of the target image is in one case determined using a downsampling technique applied to pixel values associated with the multiple pixels of the source image mapped to the same pixel of the target image.

Though it should be appreciated that any downsampling technique is in various examples used, in one case the downsampling technique comprises a filtering technique, the filtering technique comprising any of: linear filtering comprising defining the associated pixel value of the target pixel to be an average of pixel values associated with source pixels mapped to the target pixel, defining the associated pixel value of the target pixel to be a pixel value associated with a single source pixel mapped to the target pixel, defining the associated pixel value of the target pixel to be a sum of source pixels mapped to the target pixel, nearest neighbor filtering, anisotropic filtering, Lanczos filtering.

In some cases, the filtering technique comprises multiple of the abovementioned components of the filtering technique, and in some cases at least two of the abovementioned components of the filtering technique overlap.

Filtering is a well-known technique, where nearest-neighbor filtering, anisotropic filtering, linear filtering, and Lanczos filtering are well-known terms. Anisotropic filtering in some cases is natively supported in hardware comprising a graphics processing unit. Lanczos filtering comprises summing pixels using a weighting function. In various examples, a mipmap is used to further optimize performance of a downsampling process.

Mipmaps are a well-known entity, and using a mipmap comprises using a sequence of images, each of which is a lower resolution than a prior image in the sequence, and where, in some cases each image is a factor of four smaller than an immediately prior image in the sequence. In this way, downsampling is performed on a first image, and each subsequent image of a generated mipmap, each subsequent image being a factor of four smaller in resolution than an immediately prior image in the sequence, and the sequence ending when the desired compression ratio i.e. target resolution is reached.

As mentioned above, this downsampling 204 in various examples is performed as part of the mapping 202 process.

Once the target image is produced, it is optionally sent to a device, such as for decompression and display.

In various examples, the target image (a compressed image) is first encoded 206, and then the encoded compressed image is sent to a device 208, for example a head-mounted device as mentioned above with respect to FIG. 1.

In some cases, at least a portion of the method of FIG. 2 is implemented using hardware. In some cases, at least a portion of the method of FIG. 2 is implemented using software.

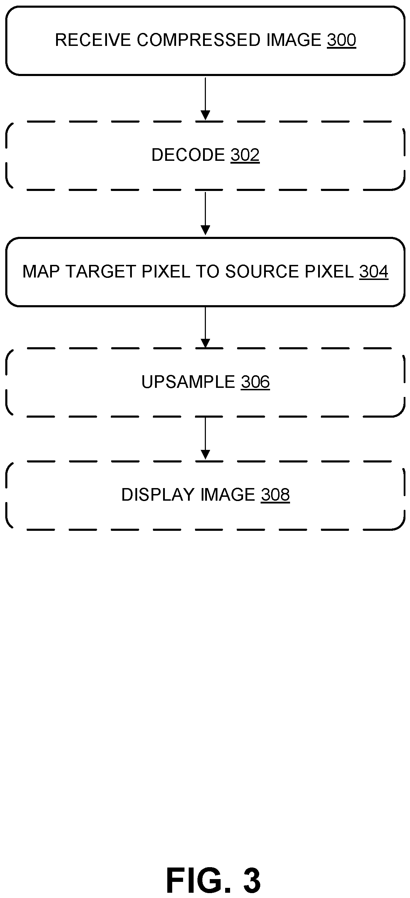

FIG. 3 is a flow chart of a method of decompressing a compressed image. Such a method is in various examples performed by a decompressor such as decompressor 104 of FIG. 1, for example a decompressor of a local computer 100 which in some cases is associated and/or inside a head-mounted device 122.

The method of FIG. 3 first comprises receiving a compressed image 300, for example an image compressed by the method of FIG. 2 and in some cases received over the network 120 of FIG. 1.

In various examples, the compressed image is encoded and is therefore decoded 302 before use.

The method of FIG. 3 further comprises mapping 304 a target pixel of the compressed image to a source pixel of a source image using a distortion function, the source image having a higher resolution than the target resolution, wherein the distortion function defines a mapping, the mapping comprising a one-to-one target-to-source pixel mapping within a foveal region, and the mapping comprising one-to-more-than-one target-to-source pixel mapping outside of a foveal region, and wherein the foveal region is a defined area of pixels.

In various examples, the distortion function is a same distortion function used to compress the compressed image. The foveal region in some examples is defined in a same way as the foveal region is defined with respect to the method of FIG. 2. In some cases, a definition of the foveal region is received, in an example after being sent by the method of FIG. 2, or accessed by the method of FIG. 3.

Mapping 304, in various examples, comprises upsampling pixels of the compressed image to pixels of the source image. In some cases, upsampling pixels of the compressed image to pixels of the source image is performed separately 306 to the mapping 304. The source image referred to with respect to FIG. 3 reflects the fact that the source image of FIG. 2 that for example is compressed and received by the method of FIG. 3 is reconstructed, albeit with a loss in quality outside of the foveal region, by the decompression of FIG. 3.

In various examples, in response to the source pixel as mapped 304 from a target pixel being within the foveal region, an associated pixel value of the source pixel is defined to be equivalent to an associated pixel value of the target pixel. In this way, pixels of the source image within the foveal region match corresponding pixels of the target image. In this way, quality within the foveal region is preserved even after decompression. Quality of a region, in some cases, refers to the resolution of a region; the ability of pixels of the region to represent an underlying image.

In various examples, in response to the source pixel as mapped 304 from a target pixel being outside of the foveal region, an associated pixel value of the source pixel is defined using an upsampling 306 technique. Upsampling refers to a method of expanding data associated with fewer pixels into data associated with more pixels. Here, because the mapping of target-to-source pixels outside the foveal region is one-to-many, a same pixel of the compressed image is mapped to multiple pixels of the source image. Associated pixel values of the multiple pixels of the source image are in one case determined using an upsampling technique applied to at least a pixel value associated with the same pixel of the compressed image mapped to the multiple pixels of the source image.

Though it should be appreciated that any upsampling technique is in various examples used, in one case the upsampling technique comprises a filtering technique, the filtering technique comprising any of: linear filtering, defining the associated pixel value of the source pixel to be an average of pixel values associated with pixels within a defined distance of the target pixel in the compressed image, defining the associated pixel value of the source pixel to be an associated pixel value of the target pixel, nearest-neighbor filtering, defining the associated pixel value of the source pixel to be an average of pixel values associated with pixels within a defined distance of the source pixel in the source image wherein a pixel of the source image used for the upsampling technique without an associated value has an associated value defined for the upsampling technique to be an associated pixel value of a pixel of the compressed image that is mapped to the pixel of the source image, anisotropic filtering, Lanczos filtering.

In some cases, the filtering technique comprises multiple of the abovementioned components of the filtering technique, and in various examples at least two of the abovementioned components of the filtering technique overlap.

As mentioned above with respect to upsampling, the mentioned filtering techniques are well-known, and it should be appreciated that any filtering and/or upsampling technique is in various examples used.

As mentioned above, this upsampling 306 in various cases is performed as part of the mapping 304 process.

Once the source image is produced, in various examples it is displayed 308. In some cases, the source image is displayed 308 on a display of a head-mounted device or projected directly into a pupil of a user's eye.

In various examples, at least a portion of the method of FIG. 3 is implemented using hardware. In various examples, at least a portion of the method of FIG. 3 is implemented using software.

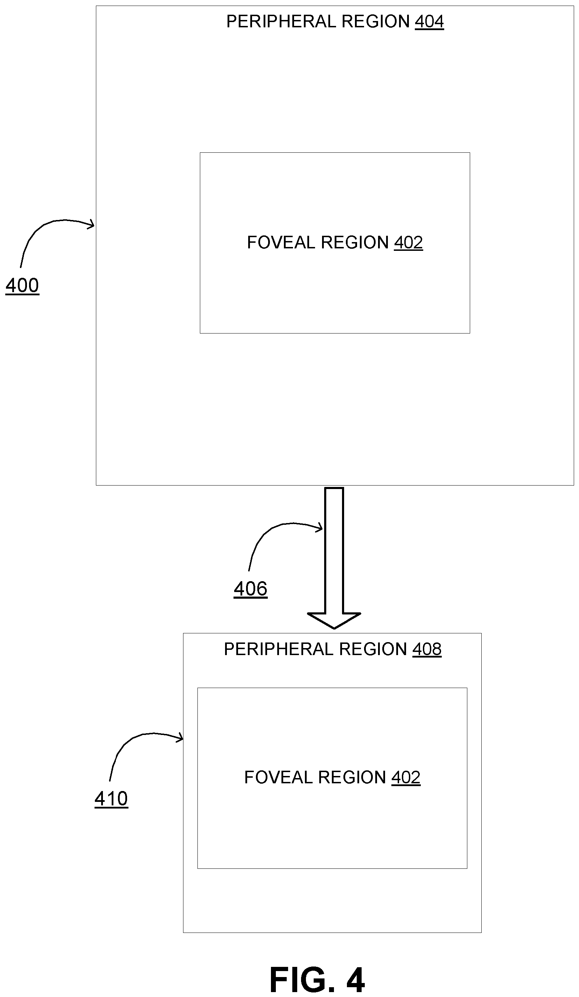

FIG. 4 shows an exemplary image before and after a compression method, for example the compression method of FIG. 2. Image 400 is a source image, where foveal region 402 is defined. Peripheral region 404 represents the area of image 400 which lies outside of the foveal region 402. It should be noted that the shape and size of the foveal region 402 and of the image 400 is merely exemplary; in one example the foveal region is rectangular, square, circular, or any other shape.

Arrow 406 represents the performing of a compression method, for example the method of FIG. 2, which takes as input image 400 and produces image 410.

The foveal region 402 is mapped one-to-one from the source image 400 to the target image 410, such that pixels of the foveal region 402 are consistent between both images. The peripheral region 408 outside of the foveal region 402 is compressed into the smaller resolution of target image 410, which in various examples results in a loss of quality in the peripheral region 408 whilst maintaining quality in the foveal region 402. The compressed image 410 in some cases is then encoded, for example using a hardware encoding unit that is able to encode images with the resolution of target image 410 at a desired rate. In various examples, the hardware encoding unit is unable to encode images with the resolution of the source image 400 at the desired rate.

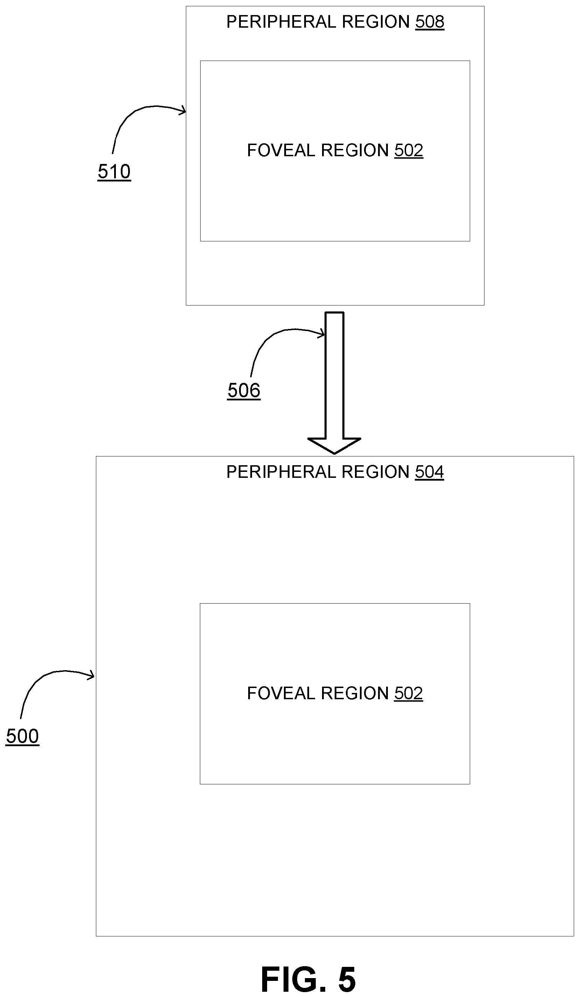

FIG. 5 shows an exemplary image before and after a decompression method, for example the decompression method of FIG. 3. Image 510 is a compressed image, where foveal region 502 is defined. Peripheral region 508 represents the area of image 510 which lies outside of the foveal region 502.

Arrow 506 represents the performing of a decompression method, for example the method of FIG. 3, which takes as input image 510 and produces image 500.

The foveal region 502 is mapped one-to-one from the compressed image 510 to the source image 500, such that pixels of the foveal region 502 are consistent between both images. The peripheral region 508 outside of the foveal region 502 is decompressed into the larger resolution of source image 500. Image quality in the foveal region 502 is maintained.

In some cases, the compressed image 510, prior to decompression 506, is decoded, for example using a hardware encoding unit that is able to decode images with the resolution of compressed image 510 at a desired rate. In various examples, the hardware encoding unit is unable to encode images with the resolution of the source image 500 at the desired rate.

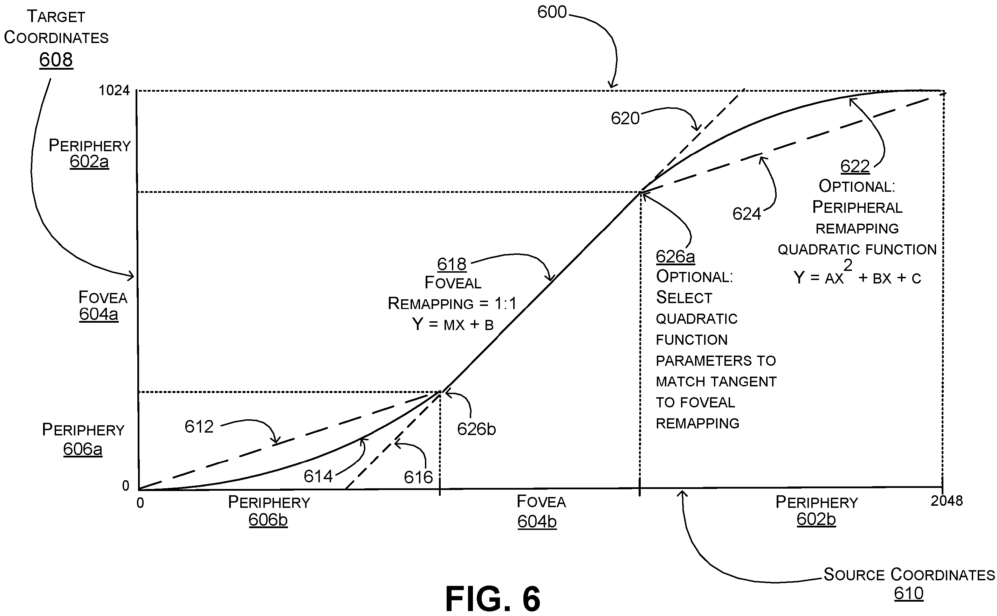

FIG. 6 shows exemplary distortion functions used for compression and/or decompression. As described above, a distortion function is used by the compression and decompression methods of FIGs. 2 and 3, the distortion function defining a mapping between source and target i.e. compressed image pixels.

The chart 600 of FIG. 6 relates to a single dimension of the source and target images, for illustration. Source coordinates axis 610 relates to positions of pixels of the source image along a first dimension, and target coordinates axis 608 relates to positions of pixels of the target image along a first dimension. As the target image has a lower resolution than the source image, the target coordinates axis 608 is shorter. one case, the first dimension is a vertical or a horizontal dimension of the respective image.

In various examples, the distortion function is separable along a vertical and a horizontal dimension of the source and target images, and the mapping of a source pixel of the source image to a target pixel of a target image using the distortion function comprises determining a target pixel by any of: determining a horizontal position of the target pixel in the target image independently of determining a vertical position of the target pixel in the target image by applying the horizontal part of the separable distortion function to a horizontal position of the source pixel in the source image, determining a vertical position of the target pixel in the target image independently of determining a horizontal position of the target pixel in the target image by applying the vertical part of the separable distortion function to a vertical position of the source pixel in the source image.

In order to apply the distortion function separably, in some cases a rectangular foveal region is defined, the size of which in one case is influenced by the factors mentioned herein as affecting the foveal region.

In various examples, the distortion function is applied to both horizontal and vertical dimensions of the images at once.

Both the source coordinates axis 610 and the target coordinates axis 608 are, in this illustrative example, segmented into three regions; a peripheral region 602a and 602b outside of a foveal region, the foveal region 604a and 604b, and a peripheral region 606a and 606b. In various examples, the respective regions are different sizes, shapes, and/or orientations, and the foveal region is defined in a way as mentioned herein.

The lines of the chart show the distortion function, defining a mapping. Straight line 618 illustrates a one-to-one linear mapping within the foveal region between source-to-target pixels of the source image and the target image respectively.

Dotted lines 616 and 620 illustrate that a one-to-one mapping cannot be used for the entirety of the target image, as there are more pixels along a dimension of the source image than there are pixels along a corresponding dimension of the target image.

Dotted lines 612 and 624 illustrate a linear mapping used in some cases as the more-than-one-to-one source-to-target pixel mapping outside of the foveal region mentioned herein, the foveal region in the chart 600 bounded by regions 604a-b. In this way, each pixel of the target image is mapped to at least one pixel of the source image. A linear mapping in one example defines a target pixel coordinate equal to a gradient multiplied by a source pixel coordinate, added to an offset.

For the linear mappings 618, 612 and 624, a choice of gradient and offset values is in one case made such that pixels at the boundaries of the defined regions 602a-b, 604a-b and/or 606a-b are mapped between source and target images with a desired relationship.

Solid lines 614 and 622 illustrate a quadratic mapping used in various examples as the more-than-one-to-one source-to-target pixel mapping outside of the foveal region mentioned herein, the foveal region in the chart 600 being the area bounded by regions 604a-b. It should be noted that any mapping outside of the foveal region that is many-to-one source-to-target in various examples is used, including a cubic, quartic, or any other mapping. A quadratic mapping, in one case, defines a target pixel coordinate equal to a first scale factor multiplied by a squared value of a source coordinate, added to a second scale factor multiplied by the value of the source coordinate, added to an offset.

In an example, a choice of first and second scale factor and offset is made such that a pixel at a boundary of a respective defined region (for example the boundary between region 602a-b and region 604a-b) is mapped between source and target images with a desired relationship.

In one example, the parameters of the quadratic mapping are selected such that a slope of the quadratic mapping 622/614 matches a slope of the one-to-one source-to-pixel mapping 618 of the foveal region 604a-b, at a pixel located at a boundary 626a/626b between the foveal region 604a-b and the outside of the foveal region 602a-b/606a-b respectively. In this way, a perceived drop in quality by a user viewing the decompressed image on a display, especially in the case of viewing using a head-mounted device, is more gradual and therefore less noticeable than if a linear mapping was used to compress/decompress a source/target image respectively.

In various examples, the distortion function is determined and/or computed by separately determining and/or computing: a mapping for a first peripheral region 606a-b for example at source coordinates lower than source coordinates of the foveal region 604a-b, a mapping for a second peripheral region 602a-b for example at source coordinates higher than source coordinates of the foveal region 604a-b, and a mapping for the foveal region 604a-b.

Alternatively, or in addition, the functionality of any of the compressor 114, encoder 116, decompressor 104, decoder 106 described herein is performed, at least in part, by one or more hardware logic components. For example, and without limitation, illustrative types of hardware logic components that are optionally used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), Graphics Processing Units (GPUs).

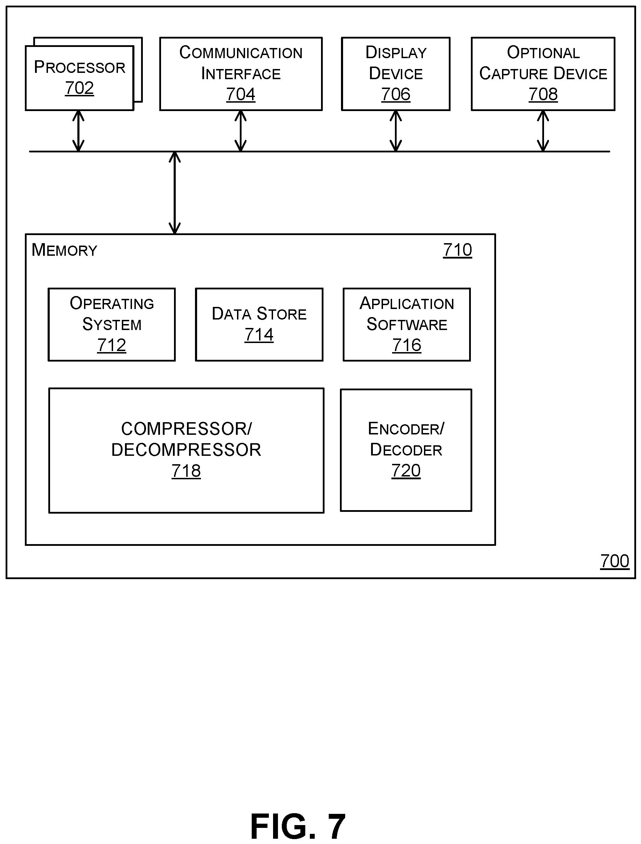

FIG. 7 illustrates various components of an exemplary computing-based device 700 which are implemented as any form of a computing and/or electronic device, and in which examples of a compressor and/or decompressor are implemented.

Computing-based device 700 comprises one or more processors 702 which are microprocessors, controllers or any other suitable type of processors for processing computer executable instructions to control the operation of the device in order to encode and/or decode a binary image. In an example where the computing-based device 700 is a display device it is a head mounted display device (HMD), a smart phone, a tablet computer or other display device. In an example where the computing device 700 is a rendering device, it is a server such as a cloud server or other server, a companion computing device of a HMD, or another computing device which has greater resources than the display device.

Data store 714 holds source images, target images, intermediate mapped data, intermediate decoded data, intermediate encoded data, depth images, color images, cross-visibility maps, sensor data or other data. An encoder and/or decoder 720 is optionally provided for encoding/decoding images for/after transmission. A compressor/decompressor 718 is provided to enable the methods of any of FIG. 2 and FIG. 3.

In some examples, for example where a system on a chip architecture is used, the processors 702 include one or more fixed function blocks (also referred to as accelerators) which implement a part of the method of any of FIG. 2 and FIG. 3 in hardware (rather than software or firmware). Platform software comprising an operating system 712 or any other suitable platform software is provided at the computing-based device to enable application software 716 to be executed on the device.

The computer executable instructions are provided using any computer-readable media that is accessible by computing based device 700. Computer-readable media includes, for example, computer storage media such as memory 710 and communications media. Computer storage media, such as memory 710, includes volatile and non-volatile, removable and non-removable media implemented in any method or technology for storage of information such as computer readable instructions, data structures, program modules or the like. Computer storage media includes, but is not limited to, random access memory (RAM), read only memory (ROM), erasable programmable read only memory (EPROM), electronic erasable programmable read only memory (EEPROM), flash memory or other memory technology, compact disc read only memory (CD-ROM), digital versatile disks (DVD) or other optical storage, magnetic cassettes, magnetic tape, magnetic disk storage or other magnetic storage devices, or any other non-transmission medium that is used to store information for access by a computing device. In contrast, communication media embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Although the computer storage media (memory 710) is shown within the computing-based device 700 it will be appreciated that the storage is, in some examples, distributed or located remotely and accessed via a network or other communication link (e.g. using communication interface 704).

Alternatively or in addition to the other examples described herein, examples include any combination of the following:
Clause A. An apparatus comprising:
   a processor;
   a memory storing instructions that, when executed by the processor, perform a method for compressing a source image, comprising:
      receiving the source image, the source image having a source resolution; and
      mapping a source pixel of the source image to a target pixel of a target image using a distortion function, the target image having a lower resolution than the source resolution,
      wherein the distortion function defines a mapping, the mapping comprising a one-to-one source-to-target pixel mapping within a foveal region, and the mapping comprising a more-than-one-to-one source-to-target pixel mapping outside of the foveal region, and
      wherein the foveal region is a defined area of pixels.
Clause B. The apparatus of Clause A, wherein the source image comprises at least one pixel with at least one associated pixel value, and wherein the method further comprises:
   in response to the target pixel being within the foveal region, defining an associated pixel value of the target pixel to be equivalent to an associated pixel value of the source pixel; and
   in response to the target pixel being outside of the foveal region, defining an associated pixel value of the target pixel using a downsampling technique.
Clause C. The apparatus of Clause B, the downsampling technique comprising a filtering technique, the filtering technique comprising any of: linear filtering comprising defining the associated pixel value of the target pixel to be an average of pixel values associated with source pixels mapped to the target pixel, defining the associated pixel value of the target pixel to be a pixel value associated with a single source pixel mapped to the target pixel, defining the associated pixel value of the target pixel to be a sum of source pixels mapped to the target pixel, nearest neighbor filtering, anisotropic filtering, Lanczos filtering.
Clause D. The apparatus of any preceding clause, the method further comprising encoding the target image to produce an encoded target image and sending the encoded target image to a head-mounted device for display.
Clause E. The apparatus of any preceding clause, wherein the foveal region is defined using at least one characteristic of a device by which the target image is to be decompressed and displayed.
Clause F. The apparatus of Clause E, wherein the target image is for decompression and display on a display of a head-mounted device, and wherein the foveal region is defined using at least one of: a position of the display of the head-mounted device and a lens type of at least one lens of the head-mounted device.
Clause G. The apparatus of any preceding clause, wherein the foveal region is defined using at least one of: a gaze direction of a user of a device by which the target image is to be decompressed and displayed, at least one characteristic of a network via which the target image is to be transmitted, an attention of a user of a device by which the target image is to be decompressed and displayed, a defined importance factor of an element of the source image.
Clause H. The apparatus of any preceding clause, wherein the foveal region is one of: predefined prior to the receiving of the source image and dynamically defined by the method.
Clause I. The apparatus of any preceding clause, wherein the distortion function is separable along a vertical and a horizontal dimension of the source and target images, and wherein the mapping of a source pixel of the source image to a target pixel of a target image using the distortion function comprises determining a target pixel by any of: determining a horizontal position of the target pixel in the target image independently of determining a vertical position of the target pixel in the target image by applying the horizontal part of the separable distortion function to a horizontal position of the source pixel in the source image, determining a vertical position of the target pixel in the target image independently of determining a horizontal position of the target pixel in the target image by applying the vertical part of the separable distortion function to a vertical position of the source pixel in the source image.
Clause J. The apparatus of any preceding clause, wherein the foveal region is a rectangular region of pixels.
Clause K. The apparatus of any preceding clause, wherein the more than one-to-one source-to-target pixel mapping outside of the foveal region is a linear mapping.
Clause L. The apparatus of any of Clauses A to J inclusive, wherein the more than one-to-one source-to-target pixel mapping outside of the foveal region is a quadratic mapping.
Clause M. The apparatus of Clause L, wherein a slope of the quadratic mapping matches a slope of the one-to-one source-to-pixel mapping of the foveal region, at a pixel located at a boundary between the foveal region and the outside of the foveal region.
Clause N. A method for compressing a source image for sending to a head-mounted device for decompression and display, the method comprising:
   receiving the source image, the source image having a source resolution and comprising at least one pixel with at least one associated pixel value;
   mapping a source pixel of the source image to a target pixel of a target image using a distortion function, the target image having a lower resolution than the source resolution,
      wherein the distortion function defines a mapping, the mapping comprising a one-to-one source-to-target pixel mapping within a foveal region, and the mapping comprising a more than one-to-one source-to-target pixel mapping outside of the foveal region, and
      wherein the foveal region is a defined area of pixels;
   in response to the target pixel being within the foveal region, defining an associated pixel value of the target pixel to be equivalent to an associated pixel value of the source pixel;
   in response to the target pixel being outside of the foveal region, defining an associated pixel value of the target pixel using a downsampling technique;
   encoding the target image using a hardware encoding unit to produce an encoded target image; and
   sending the encoded target image to the head-mounted device.
Clause O. The method of Clause N, the method at least partially carried out using hardware logic.
Clause P. A method for decompressing a compressed image, comprising:
   receiving the compressed image, the compressed image having a target resolution; and
   mapping a target pixel of the compressed image to a source pixel of a source image using a distortion function, the source image having a higher resolution than the target resolution,
   wherein the distortion function defines a mapping, the mapping comprising a one-to-one target-to-source pixel mapping within a foveal region, and the mapping comprising one-to-more-than-one target-to-source pixel mapping outside of the foveal region, and
   wherein the foveal region is a defined area of pixels.
Clause Q. The method of Clause P, wherein the compressed image comprises at least one pixel with at least one associated pixel value, and wherein the method further comprises:
   in response to the source pixel being within the foveal region, defining an associated pixel value of the source pixel to be equivalent to an associated pixel value of the target pixel; and
   in response to the source pixel being outside of the foveal region, defining an associated pixel value of the source pixel using an upsampling technique.
Clause R. The method of Clause Q, the upsampling technique comprising a filtering technique, the filtering technique comprising any of: linear filtering, defining the associated pixel value of the source pixel to be an average of pixel values associated with pixels within a defined distance of the target pixel in the compressed image, defining the associated pixel value of the source pixel to be an associated pixel value of the target pixel, nearest-neighbor filtering, defining the associated pixel value of the source pixel to be an average of pixel values associated with pixels within a defined distance of the source pixel in the source image wherein a pixel of the source image used for the upsampling technique without an associated value has an associated value defined for the upsampling technique to be an associated pixel value of a pixel of the compressed image that is mapped to the pixel of the source image, anisotropic filtering, Lanczos filtering.
Clause S. The method of any of Clauses P to R inclusive, the method at least partially carried out using hardware logic.
Clause T. The method of any of Clauses P to S inclusive, wherein the compressed image is encoded, the method further comprising decoding the compressed image prior to the mapping, and the method further comprising displaying the source image on a display of a head-mounted device.

The term 'computer' or 'computing-based device' is used herein to refer to any device with processing capability such that it executes instructions. Those skilled in the art will realize that such processing capabilities are incorporated into many different devices and therefore the terms 'computer' and 'computing-based device' each include personal computers (PCs), servers, mobile telephones (including smart phones), tablet computers, set-top boxes, media players, games consoles, personal digital assistants, wearable computers, and many other devices.

The methods described herein are performed, in some examples, by software in machine readable form on a tangible storage medium e.g. in the form of a computer program comprising computer program code means adapted to perform all the operations of one or more of the methods described herein when the program is run on a computer and where the computer program may be embodied on a computer readable medium. The software is suitable for execution on a parallel processor or a serial processor such that the method operations may be carried out in any suitable order, or simultaneously.

Those skilled in the art will realize that storage devices utilized to store program instructions are optionally distributed across a network. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a digital signal processor (DSP), programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. An apparatus comprising:
a processor (702);
a memory (710) storing instructions that, when executed by the processor, perform a method for compressing a source image, comprising:
receiving the source image (200), the source image (400) having a source resolution; and
mapping (202) a source pixel of the source image (400) to a target pixel of a target image (410) using a distortion function, the target image (410) having a lower resolution than the source resolution,
wherein the distortion function defines a mapping, the mapping comprising a one-to-one source-to-target pixel mapping (618) within a foveal region (402, 502), and the mapping comprising a more-than-one-to-one source-to-target pixel mapping (612, 614, 622, 624) outside of the foveal region (402, 502), and
wherein the foveal region (402, 502) is a defined area of pixels.

2. The apparatus of claim 1, wherein the source image comprises at least one pixel with at least one associated pixel value, and wherein the method further comprises:
in response to the target pixel being within the foveal region, defining an associated pixel value of the target pixel to be equivalent to an associated pixel value of the source pixel; and
in response to the target pixel being outside of the foveal region, defining an associated pixel value of the target pixel using a downsampling technique.

3. The apparatus of claim 2, the downsampling technique comprising a filtering technique, the filtering technique comprising any of: linear filtering comprising defining the associated pixel value of the target pixel to be an average of pixel values associated with source pixels mapped to the target pixel, defining the associated pixel value of the target pixel to be a pixel value associated with a single source pixel mapped to the target pixel, defining the associated pixel value of the target pixel to be a sum of source pixels mapped to the target pixel, nearest neighbor filtering, anisotropic filtering, Lanczos filtering.

4. The apparatus of any preceding claim, the method further comprising encoding the target image to produce an encoded target image and sending the encoded target image to a head-mounted device for display.

5. The apparatus of any preceding claim, wherein the foveal region is defined using at least one characteristic of a device by which the target image is to be decompressed and displayed.

6. The apparatus of claim 5, wherein the target image is for decompression and display on a display of a head-mounted device, and wherein the foveal region is defined using at least one of: a position of the display of the head-mounted device and a lens type of at least one lens of the head-mounted device.

7. The apparatus of any preceding claim, wherein the foveal region is defined using at least one of: a gaze direction of a user of a device by which the target image is to be decompressed and displayed, at least one characteristic of a network via which the target image is to be transmitted, an attention of a user of a device by which the target image is to be decompressed and displayed, a defined importance factor of an element of the source image.

8. The apparatus of any preceding claim, wherein the foveal region is one of:
predefined prior to the receiving of the source image and dynamically defined by the method.

9. The apparatus of any preceding claim, wherein the distortion function is separable along a vertical and a horizontal dimension of the source and target images, and wherein the mapping of a source pixel of the source image to a target pixel of a target image using the distortion function comprises determining a target pixel by any of:
determining a horizontal position of the target pixel in the target image independently of determining a vertical position of the target pixel in the target image by applying the horizontal part of the separable distortion function to a horizontal position of the source pixel in the source image, determining a vertical position of the target pixel in the target image independently of determining a horizontal position of the target pixel in the target image by applying the vertical part of the separable distortion function to a vertical position of the source pixel in the source image.

10. The apparatus of any preceding claim, wherein the foveal region is a rectangular region of pixels.

11. The apparatus of any preceding claim, wherein the more than one-to-one source-to-target pixel mapping outside of the foveal region is a linear mapping.

12. The apparatus of any of claims 1 to 10 inclusive, wherein the more than one-to-one source-to-target pixel mapping outside of the foveal region is a quadratic mapping.

13. The apparatus of claim 12, wherein a slope of the quadratic mapping matches a slope of the one-to-one source-to-pixel mapping of the foveal region, at a pixel located at a boundary between the foveal region and the outside of the foveal region.

14. A method for decompressing a compressed image, comprising:
receiving the compressed image (300), the compressed image (510) having a target resolution; and
mapping (304) a target pixel of the compressed image to a source pixel of a source image (500) using a distortion function, the source image (500) having a higher resolution than the target resolution,
wherein the distortion function defines a mapping, the mapping comprising a one-to-one target-to-source pixel mapping (618) within a foveal region (402, 502), and the mapping comprising one-to-more-than-one target-to-source pixel mapping (612, 614, 622, 624) outside of the foveal region (402, 502), and
wherein the foveal region (402, 502) is a defined area of pixels.

15. A method for compressing a source image for sending to a head-mounted device for decompression and display, the method comprising:
receiving the source image (200), the source image (400) having a source resolution and comprising at least one pixel with at least one associated pixel value;
mapping (202) a source pixel of the source image (400) to a target pixel of a target image (410) using a distortion function, the target image (410) having a lower resolution than the source resolution,
wherein the distortion function defines a mapping, the mapping comprising a one-to-one source-to-target pixel mapping (618) within a foveal region (402, 502), and the mapping comprising a more than one-to-one source-to-target pixel mapping (612, 614, 622, 624) outside of the foveal region (402, 502), and
wherein the foveal region (402, 502) is a defined area of pixels;
in response to the target pixel being within the foveal region (402, 502), defining an associated pixel value of the target pixel to be equivalent to an associated pixel value of the source pixel;
in response to the target pixel being outside of the foveal region, defining an associated pixel value of the target pixel using a downsampling technique;
encoding (206) the target image (410) using a hardware encoding unit to produce an encoded target image; and
sending (208) the encoded target image to the head-mounted device.
